# EUROPEAN PATENT SPECIFICATION

(11) **EP 3 528 014 B1**
(45) Date of publication and mention of the grant of the patent: **03.05.2023**
(21) Application number: 18157097.9
(22) Date of filing: 16.02.2018
(51) Int. Cl.: G01V 8/20

(54) **LIGHT CURTAIN AND METHOD OF OPERATING A LIGHT CURTAIN**
LICHTVORHANG UND VERFAHREN ZUM BETRIEB EINES LICHTVORHANGS
RIDEAU DE LUMIÈRE ET PROCÉDÉ D'EXPLOITATION D'UN RIDEAU DE LUMIÈRE

(43) Date of publication of application: 21.08.2019
(73) Proprietor: Rockwell Automation Switzerland GmbH, 5000 Aarau (CH)
(72) Inventor: HARDEGGER, Martin, 7320 Sargans (CH); STEIN, Manfred Norbert, 7013 Domat/Ems (CH); MEINHERZ, Carl, 7208 Malans (CH)
(74) Representative: Grünecker Patent- und Rechtsanwälte PartG mbB

(56) References cited:
- EP-A1- 2 796 903
- DE-A1- 10 046 136
- FR-A1- 2 778 749

## Description

The present invention relates to light curtains, in particular safety light curtains, for monitoring a protective field. Furthermore, the present invention relates to optical units which are part of such a light curtain, and to a method for monitoring the correct pairing of such light curtain optical units.

Generally, light curtains and in particular safety light curtains detect the movement or intrusion of objects into guarded zones, and more particularly, provide protection for human operators who are working with machines or other industrial equipment.

Light curtains employing infrared or visible light beams are used to provide operator safety in a variety of industrial applications. Light curtains typically are employed for operator protection around machinery, such as punch presses, brakes, molding machines, automatic assembly equipment, coil winding machinery, robot operation, casting operations and the like. Conventional light curtains typically employ light emitting diodes (LED) mounted at spaced positions along a transmitter bar at one side of the guard zone and phototransistors (PT), photodiodes or photoreceivers mounted along a receiver bar at the opposite side of the zone. The LEDs transmit modulated infrared light beams along separate parallel channels to the PTs at the receiver bar. If one or more beams are blocked from penetration by an opaque object, such as the operator's arm, a control circuit either shuts the machine down, prevents the machine from cycling, or otherwise safeguards the area.

Usually, safety light curtains comprise two optical units (also called bars, sticks, edges or strips), which are formed as two different constructional units, one of the optical units having the functionality of an emitter and one of a receiver. This dedicated architecture of an emitter and receiver, however, has several drawbacks.

Firstly, the fabrication costs are high, because each type of optical unit has to be fabricated differently. Further, it is known to use the optical path from the emitter to the receiver also for transmitting information, for instance for a synchronization. However, in a system where one of the optical units has only the function of an emitter and the other one only the function of a receiver, the optical communication is only unidirectional, i.e. from the sender side to the receiver side. Therefore the optical synchronization may be difficult and a transmission of communication information is possible only in one direction.

It has already been proposed to locate receivers and transmitters on each of the first and second optical units, as this is described in the European patent EP 1870734 B1. Here, the grid has two identical transmitting/receiving strips, to which transmitting and receiving units are fixed. The transmitting/receiving strips are placed opposite to each other with a protective field being formed between the strips. The transmitting/receiving strips are identically formed in control and evaluation units. The control and evaluation units have safety outputs, which are formed together as a switching channel. An identical power supply is provided for all the strips.

Furthermore, it is known from European patent application EP 2 813 868 A1 that such optical units synchronize with each other in order to form the protective light curtain.

However, it could be shown that under disadvantageous conditions and/or when the individual optical units of several light curtains in close vicinity are not installed properly, synchronization may happen between a first optical unit and a neighboring third optical unit of the same type and brand which, however, is not the one belonging to the intended protective field. Consequently, an unsafe condition may arise because the first optical unit may assume an uninterrupted light curtain while in reality the beam path between the first optical unit and the second optical unit is interrupted for instance by an intruding person. Such an erroneous synchronization may also happen with deflected beams that reach the first optical unit via mirroring surfaces. An example scenario may occur with a light curtain system being installed and running when a light emitter is pointed towards a receiver. In case another receiver is situated in the viewing field of this emitter, or when the emitted beams are mirrored for instance by a machine part towards such another receiver, this unintentionally involved other receiver might switch ON the output signal switching device, OSSD, which in the OFF state causes a control unit to output a safety signal upon interruption of at least one light barrier.

The inventors of the present invention have recognized that an erroneous pairing of optical units that are not initially installed to be interacting with each other leads to dangerous situations and has to be prevented. A conventional possibility to overcome this problem would be to use beam coding for such scenarios. However, this concept only works in case multiple systems are installed in a way that different systems with the same beam coding cannot see each other, even in all cases where mirroring objects are intruding the detection field. This is not guaranteed in all cases. Additional mechanical shades might also help to prevent this problem, although they are not the preferred solution because they enhance the costs and complexity of the safety system.

DE 100 46 136 A1 relates to a light gate which has unique bit patterns for each beam path between the transmitter and receiver arrays in order to avoid synchronization between unintended senders and transmitters. The receiver only responds to one particular sender emitting a cyclic predetermined data pattern. The assignment of the transmitted bits of the bit pattern is changed with respect to the light axes from one complete transmission cycle to the next according to a predetermined assignment rule.

According to FR 2 778 749 A1, an optical barrier is provided by an optical barrier unit that is made up of one or more emitter element modules and one or more receiver element modules. The emitter modules present are controlled by a control circuit to emit modulated beams encoded in a particular manner. In this regard, a particular beam of each emitter module is encoded with one of a pair of unique words that both indicate the identity of the module emitting that beam and further indicate a different binary word value depending on which of the pair is used as part of a further code that will identify the barrier unit. If more than one emitter module is part of the optical barrier, a corresponding number of particular beams, one for each emitter module present, are modulated with appropriate ones of other pairs of unique words to both identify those modules and to provide the proper binary word value as a further part of the optical barrier unit's identification number. The other beams of all of the one or more modules present are modulated with one of two other code words that indicate the high and low binary word values needed to complete the identification number of the optical barrier unit. This permits modules to exchange coded words that identify the barrier unit as well as identifying the modules being used, where the presence of the unique words that indicate the identity of the particular module emitting that particular modulated beam permits synchronization since the receiving element or elements in a particular receiving module intended to receive that particular modulated beam encoded with the identification number for the emitting module are known and what these elements or element actually receives as a modulated beam is determined.

EP 2 796 903 A1 relates to light curtains, in particular safety light curtains, for monitoring a protective field, in particular to optical units of such light curtains which comprise optoelectronic components interconnected by a communication bus, and to a method for allocating individual addresses to each of a plurality of optoelectronic components. The optical unit comprises a controller unit, a plurality of optoelectronic components interconnected by means of a communication bus, each of said optoelectronic components having a transmission input terminal for receiving a transmission signal and a transmission output terminal for outputting a transmission signal, and a receiving terminal for receiving a control signal from said control unit. An individual address is allocated to each of said optoelectronic components depending on a position of the respective optoelectronic component with respect to the other optoelectronic components.

The object underlying the present invention is to provide a light curtain and a method for operating a pair of optical units, which enhances the safety of such a light curtain, at the same time keeping the costs and complexity low.

This object is solved by the subject matter of the independent claims. Advantageous embodiments of the present invention are the subject matter of the dependent claims.

The present invention is based on the idea that when installing a light curtain, the optical units are paired with each other and this pairing is monitored continuously during the operation of the light curtain or after each interruption of the protective field, at least during each power-up procedure.

In particular, the present invention provides a light curtain for monitoring a protective field, said light curtain comprising at least one first optical unit comprising at least one first radiation emitter and/or first radiation receiver, and at least one second optical unit comprising at least one second radiation receiver and/or second radiation emitter for forming at least one radiation beam between the first and second optical unit. The first optical unit has a first controller unit and a first communication interface, and the second optical unit has a second controller and a second communication interface.

According to the present invention, a unique identifier is allocated to at least one of said optical units, wherein the first and second communication interfaces are operable to exchange communication signals between the first and second optical units, and wherein at least one of the first and second controller is operable to verify the identifier of the opposing optical unit based on the transmitted communication signals. A unique identifier is allocated to each of said optical units and both the first and second controllers are operable to verify the identifier of the opposing optical unit based on the transmitted communication signals.

The advantage of this solution can be seen in the fact that even in situations where a light curtain is installed in a way that either components of a different, adjacent light curtain or reflected radiation interfere with the light curtain, dangerous situations can be avoided. On the other hand, the architecture complexity and costs of the light curtain system is not unduly increased.

A particularly simple and cost effective solution is achieved when forming said first and second communication interfaces by said at least one first and second radiation emitters or radiation receivers. In other words, the radiation beams that monitor the protective field are also used for allowing a communication between the first and second optical unit.

According to a further advantageous embodiment, said first and second optical units each comprise a transceiver unit carrying a plurality of light emitting elements and light receiving elements, said first and second transceiver units having an identical structure. Each optical unit has at least one separate detachable plug-in module. The first and second transceiver units are identically built, whereas the first and second plug-in modules differ from each other and thus define the functionality of the respective optical unit. For instance, the plug-in module differentiates an optical unit as the emitter with, for instance, the test input, or as the receiver with, for instance, the output signal switching devices, OSSD. Such a modular architecture allows a very cost-effective fabrication, because the transceiver modules are identically built and on the other hand, can be applied in a very flexible way for a multitude or architectures.

In order to be able to send the information regarding its own identifier and for being able to compare the unique identifier received from the opposing optical unit, each optical unit comprises storing means for storing its own unique identifier and for storing the opposing optical unit's unique identifier. Furthermore, permanent or volatile storing means may be provided for storing the information regarding the unique identifier received from the opposing optical unit with the identifier that has been stored during the first power-up procedure. Preferably, the storing is permanent so that no erroneous pairing can be performed during the start-up.

It has to be mentioned that the term "light" in the context of the present invention is intended to cover any kind of electromagnetic radiation, preferably in a wavelength range from infrared to ultraviolet, and is not limited to visible light only. According to an advantageous embodiment, the emitted light is an infrared radiation having a wavelength between about 750 nm and 1500 nm, or visible light having a wavelength between about 400 nm and 750 nm.

The present invention further relates to a method of operating a light curtain having at least one first optical unit comprising at least one first radiation emitter and/or first radiation receiver, and at least one second optical unit comprising at least one second radiation receiver and/or second radiation emitter for forming at least one radiation beam between the first and second optical unit, said first optical unit comprising a first controller unit and a first communication interface, said second optical unit comprising a second controller and a second communication interface, said method comprising the following steps:
transmitting a first unique identifier assigned to the first optical unit towards the second optical unit, and/or transmitting a second unique identifier assigned to the second optical unit towards the first optical unit,
verifying whether the received unique identifiers of the first and/or second optical units match with identifiers that are stored in the receiving optical unit.

The method further comprises the following steps:
during a power-up procedure, determining whether the power-up procedure is a first power-up procedure after installation,
if the power-up procedure is a first power-up procedure after installation, storing the first unique identifier in the second optical unit and/or storing the second unique identifier in the first optical unit,
if the power-up procedure is not the first power-up procedure after installation, verifying whether the unique identifiers of the first and/or second optical units match with the stored identifiers.

In this case, a user does not have to provide any additional confirmation when a set of new optical units is installed and put into operation for the first time. Only in case the power-up procedure which is not the first power-up procedure after installation is stopped, if the unique identifiers of the first and second optical units do not match with the stored identifiers. This arrangement has the advantage that the first installation may start with optical units that are not yet paired without generating a confirmation request requiring a user confirmation. This is also valid, if only one of the two sticks starts up the first time. This is important for any repair case, where the other stick remains installed but a new one is added to the system. Consequently, the unique identifiers do not have to be paired during the fabrication process, thereby enhancing the flexibility of the system and reducing costs. On the other hand, a user input may be required for continuing the power-up procedure if the unique identifiers of the first and second optical units do not match with the stored identifiers. This allows a user to start the system after ensuring that the new configuration is indeed intentional and safe. In this case, the method may store the unique identifier of the first and second optical units in the respective opposing optical unit as the new pairing.

Such a confirmation by a user may also be required in case that an operation mode using coded beams is employed, irrespective of whether the light curtain is put into operation for the first time or not.

Furthermore, a flag may be provided which indicates a state where the light curtain is fresh from the factory. This is a simple means of determining whether the current power-up procedure is a first power-up procedure after installation. Advantageously, the information of this flag is altered after the first power-up procedure, so that every following power-up procedure is determined to be not the first one after installation.

In order to facilitate the initialization of a light curtain after maintenance, this flag can be reset into indicating the state where the light curtain is fresh from the factory.

According to a further advantageous embodiment of the present invention, the unique identifier is additionally verified during continuous operation of the light curtain. Thereby the safety of the system is further enhanced because also conditions that have changed during operation can be taken into account.

Advantageously, said first and second optical units perform a bidirectional optical communication between each other. However, a unidirectional communication may also be sufficient, if the unique identifier of only one of the optical units is monitored. This may for instance be the case for light curtains with one dedicated emitter stick and a corresponding receiver stick, where only the receiver stick's identifier is stored in the emitter stick and monitored at least during every further power-up procedure.

According to an exemplary embodiment of the present invention, said first and second unique identifiers comprise a binary word. Such a binary word may be transmitted for instance in a header of a message, similar to an individual address.

In addition to providing the unique identifiers, the radiation beams may also have a specific "encoded" pulse pattern, provided that the radiation beam is formed by a pulsed radiation. For instance, the radiation may be transmitted as a train of pulses which are transmitted at specific instances in each of a plurality of time frames. These instances have to match so that two communicating optical units can synchronize with each other.

The accompanying drawings are incorporated into and form a part of the specification to illustrate several embodiments of the present invention. These drawings together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. Further features and advantages will become apparent from the following more particular description of the various embodiments of the invention, as illustrated in the accompanying drawings, in which like references refer to like elements, and wherein:
- **Fig. 1**: shows a schematic representation of a light curtain having two optical units;
- **Fig. 2**: shows a schematic representation of a light curtain comprising two optical units according to a first embodiment;
- **Fig. 3**: shows a schematic representation of a light curtain comprising two optical units according to an example not forming part of the invention

- **Fig. 4**: shows a schematic representation of a light curtain comprising two optical units according to another embodiment;
- **Fig. 5**: shows a schematic representation of a light curtain comprising two optical units according to an example not forming part of the invention

- **Fig. 6**: shows a schematic functional block diagram of a light curtain according to the present invention;
- **Fig. 7**: shows a schematic flow chart of a self-identification procedure;
- **Fig. 8**: shows a schematic flow chart of a power-up procedure;
- **Fig. 9**: shows a schematic flow chart of an administration mode.

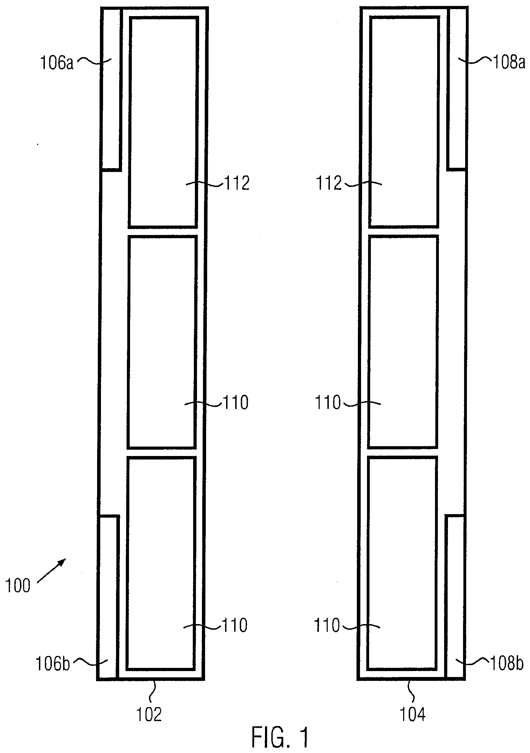

Referring now to FIG. 1, a schematic representation of a light curtain comprising two optical units is shown.

The light curtain 100 in this embodiment consists of two identical first and second optical units 102, 104, which form between each other a plurality of light barriers for monitoring a protective field. However, the ideas of the present invention are also applicable in systems which comprise more than two optical units. The optical units 102, 104 may for instance be formed according to the principles of the European patent application EP 2 511 737 A1, and may in particular use plug-in modules 106, 108 for defining their respective functionality. Of course, the ideas of the present invention are also applicable to arrangements, where the first optical unit is an emitter bar (only comprising radiation emitters) and the second optical unit is a receiver bar (only comprising radiation detectors). But in this case the confirmation can only be done at the receiver bar which is less effective compared to a set up with two transceiver bars where the confirmation can be carried out at both bars.

In the following detailed description, the first optical unit 102 will be described as having a leading (or master) function, whereas the second optical unit 104 is considered to follow this lead. Consequently, the first optical unit 102 will also be referred to as the "principal", while the second optical unit 104 is referred to as a "companion". It is however clear for a person skilled in the art that this particular exemplary arrangement is not essential for carrying out the ideas of the present invention.

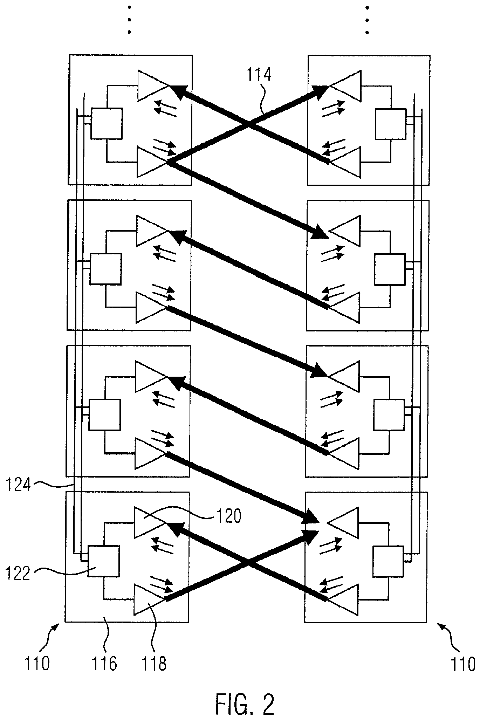

According to the embodiment shown in FIG. 1, each optical unit 102, 104 comprises two preferably identical modules 110 each having light emitting and light receiving elements. These optical modules 110 may be identically built for both optical units 102, 104. Each of the optical units 102, 104 further comprises at least one second optical module 112 that also comprises a microcontroller providing the necessary intelligence to the optical unit 102, 104. Each of the modules 110, 112 may for instance have a height of about 150 mm. However, any other size or number of modules within each optical unit 102, 104 can also be used together with the present invention. As shown in FIG. 1, the first and second optical unit 102, 104 may be identically built except for the plug-in modules 106a, 106b and 108a, 108b which are defining the particular functionality of each of the optical units. However, as will become more apparent when referring to FIG. 2 to 5, the optical modules do not necessarily have to be identical for each of the optical units, but can differ in that one of the optical units has modules comprising only emitters, whereas the other has modules with only receivers.

Each of the optical modules 110 comprises a plurality of optoelectronic components with their associated circuitry for emitting and sensing the radiation beams. The second optical module 112 contains the same optical functions and additionally, at least one microcontroller and optionally electronic circuitry, such as an interface with an external connector. However, for using an addressing according to the present invention, the optoelectronic components do not necessarily have to be grouped in optical modules 110, 112.

A more detailed view of a part of two opposing optical modules 110 is given with reference to FIG. 2. The light curtain may be formed by a linear array of radiation beams 114 which can either be infrared radiation with a wavelength between about 750 nm and 1500 nm, or visible light having a wavelength between about 400 nm and 750 nm.

The radiation beams 114 may for instance be activated sequentially, one beam at a time, from one peripheral end to the other peripheral end of each stick. Because each optical unit 102, 104 has transmitting and sensing photo elements, the scan through the light curtain activates every element sequentially and with an alternating direction, the beam being sent from the second optical unit 104 to the first optical unit 102 and back again. During such a scan sequence, the respective receiving stick always only sequentially detects the light from the pre-determined emitting element to the corresponding receiving element. In order to allow for such a complex scan procedure, each optical unit 102, 104 is formed by a plurality of optoelectronic components 116 each comprising at least one light-emitting element 118 and at least one light-receiving element 120.

Each of the optoelectronic components 116 has a rather high degree of integrated intelligence in the form of a separate control element 122 which may for instance be formed as an integrated circuit, such as an application specific integrated circuit (ASIC). Each of the control elements 122 provides electronic circuitry for driving the at least one light-emitting element 118 and for processing signals generated by the at least one light-receiving element 120. In order to communicate with the higher level controller, each of the optoelectronic components 116 is connected to a communication bus 124.

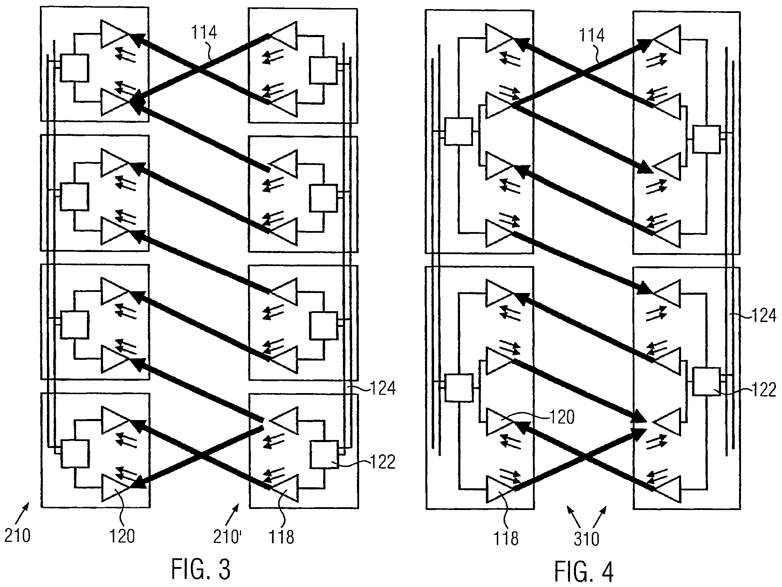

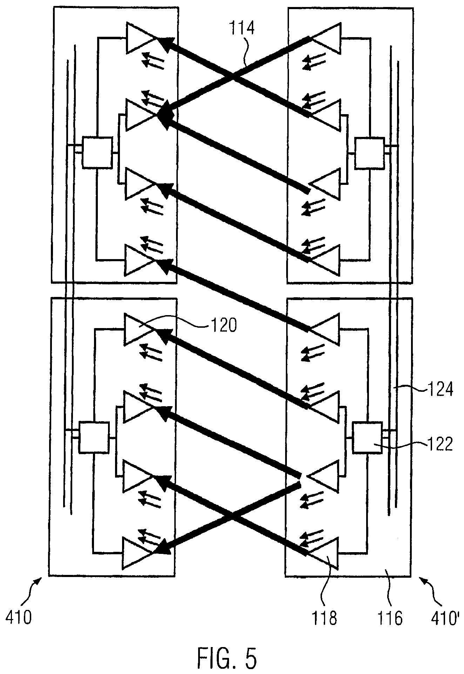

Alternative architectures which can also be advantageously used with the addressing scheme according to the present invention is depicted in figure 4. Firstly, as as an example not forming part of the invention shown in FIG. 3, the present invention of course can also be employed with systems that are optically unidirectional in that one of the optical units (reference numeral 210) only comprises optical senders and the other optical unit 210' comprises only receivers. Furthermore, as shown for the optical units 310 and 410, 410' in FIG. 4 and 5, each control unit 122 can be assigned to at least two emitters and/or receivers. As an example not forming part of the invention, FIG. 5 illustrates the optically unidirectional architecture.

As mentioned above, under disadvantageous conditions and/or when the individual optical units of several light curtains in close vicinity are not installed properly, synchronization may happen between a first optical unit and a neighboring second optical unit of the same type and brand which, however, is not the one belonging to the intended protective field. Consequently, an unsafe condition may arise because the first optical unit may assume an uninterrupted light curtain while in reality the beam path between the first optical unit and the second optical unit is interrupted for instance by an intruding person. Such an erroneous synchronization may also happen with deflected beams that reach the first optical unit via mirroring surfaces. An example scenario may occur with a light curtain system being installed and running when a light emitter is pointed towards a receiver. In case another receiver is situated in the viewing field of this emitter, or when the emitted beams are mirrored for instance by a machine part towards such another receiver, this unintentionally involved other receiver might switch ON the output signal switching device, OSSD, which in the OFF state causes a control unit to output a safety signal upon interruption of at least one light barrier.

Consequently, according to the present invention, the controllers 112 (shown in Figure 1) comprise storing means that store a unique identifier of the respective optical unit 102, 104. During the first power-up of the light curtain 100 the unique identifier of the first optical unit 102 is transmitted to the second optical unit a 104 and stored in the controller 112. On the other hand, the unique identifier of the second optical unit 104 is transmitted to the first optical unit 102 and is stored by the controller 112 of the first optical unit 102. A factory fresh flag provides the information that this is the first power-up procedure after installation of the light curtain 100. This procedure of storing the respective identifier of the opposing optical unit is also referred to as "pairing" in the following.

Whenever the light curtain 100 is subsequently shut down and powered up again, the controllers 112 exchange the respective unique identifiers and compare the received values with the values stored in the storing means during the first power-up procedure. In the event that either a mirrored signal for the radiation from an adjacent different optical unit is received by one of the optical unit instead of the expected opposing optical unit, the unique identifier which is received together with this erroneous signal is different to the identifier which is expected to be received. Consequently, the light curtain 100 may stop the power-up procedure and emit a warning signal.

No unsafe conditions can occur and no erroneous switching ON of an OSSD is possible.

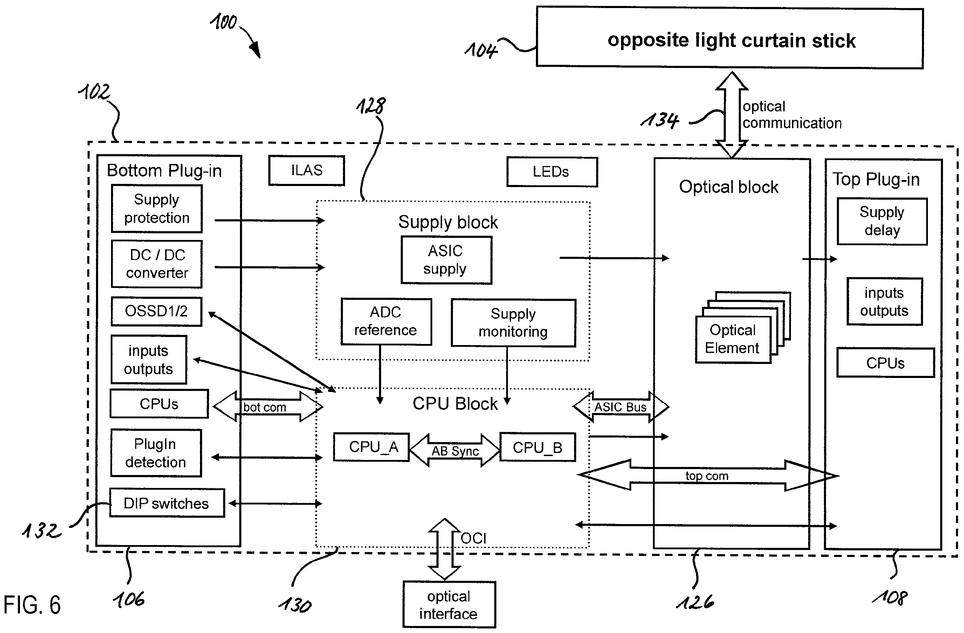

Fig. 6 shows a more detailed block diagram of a light curtain 100 according to an exemplary embodiment of the present invention.

According to the embodiment shown in Fig. 6, the first optical unit 102 which may form a principal and the second optical unit 104 which may form a companion are structured essentially identical and differ from each other only in the configuration of their plug-in modules 106, 108. For reasons of simplicity, in Fig. 6 only the details of the first optical unit 102 are shown. The optical unit 102 comprises an optical block 126 which symbolizes the plurality of optoelectronic components comprising the light emitting and light receiving elements. The top plug-in module 108 which is optional for the present invention may for instance comprise additional CPUs, inputs/outputs, and a supply delay. The bottom plug-in module 106 may exemplarily define the functionality of the first optical unit 102 as a principal comprising the OSSD.

Moreover, the optical unit 102 comprises a supply block 128 for managing the power supply and a CPU block 130 representing the control element of the optical unit 102.

A bidirectional optical communication 134 takes place between the optical block 126 of the first optical unit 102 and the corresponding opposite light curtain stick 104. One or more DIP switches 132 are provided that allow a user to manually choose particular operational configurations. For instance, the setting of the DIP switch may indicate that an operational mode is to be used that employs beam coding. In the context of the present invention, the term "beam coding" signifies an operational mode where the optical communication between the first optical unit 102 and the second optical unit 104 is performed using a particular defined optical pulse pattern. Of course, the first and second optical units 102, 104 have to use the same pulse pattern in order to be able to communicate with each other.

The optical unit 102 may further comprise an optical alignment system (integrated laser alignment system, ILAS) and one or more light emitting diodes (LED) that are used for signaling purposes. An additional optical communication interface OCI may be provided for connecting the light curtain with an external device, such as a personal computer.

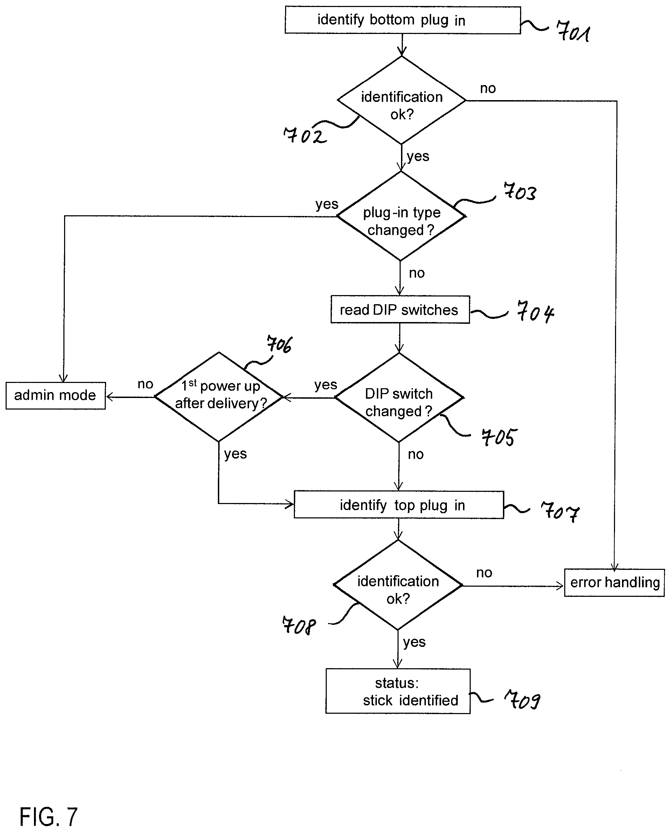

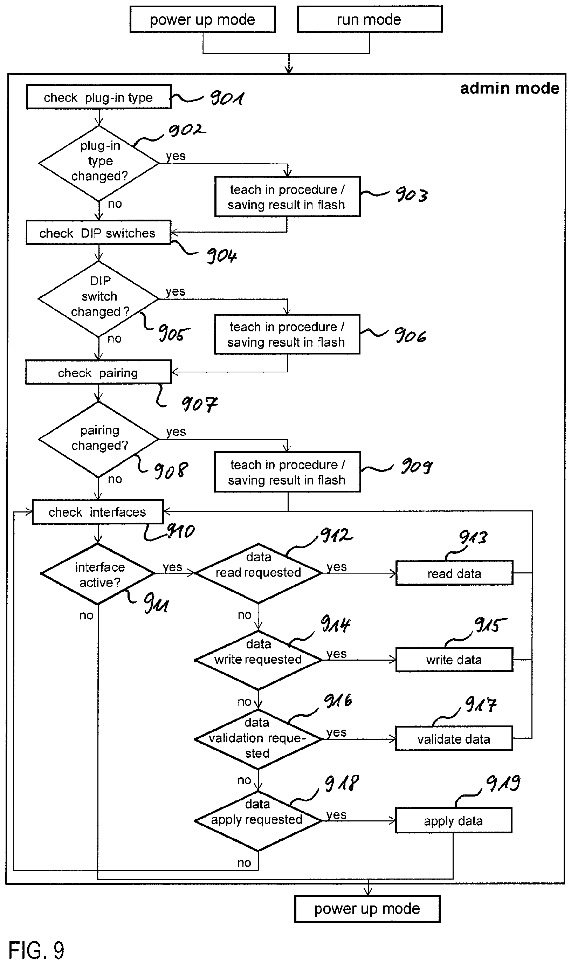

Fig. 7 illustrates as a schematic flow chart the identification steps that are performed by each optical unit 102, 104 during a power-up procedure. The process starts with identifying the bottom plug-in module (step 701) and deciding whether the identification could be correctly established (step 702). If this identification did not take place properly, the process exits towards an error handling routine. If the answer is affirmative, it is decided, whether the plug-in module has been changed and replaced by a different type (step 703). If this is the case, an administration mode is entered (see Fig. 9 and the specification below). If, however, the plug-in type has not been changed, the DIP switches are read out in the next step (step 704).

Furthermore, if the DIP switch has not been changed (step 705), the next step (step 707) is to identify the top plug-in module. Only in case the top plug-in module also could be identified successfully (step 708), the process proceeds to the status that this particular stick has been identified (step 709). Otherwise, the process exits into the error handling routine.

Furthermore, if the DIP switch has been changed, it is decided whether the present procedure is the first power-up procedure after delivery (step 706). If this is not the case, the administration mode is entered. However, if the reason for the DIP switch being changed is that it is the first power-up after delivery, the process proceeds to the identification of the top plug-in unit (step 707).

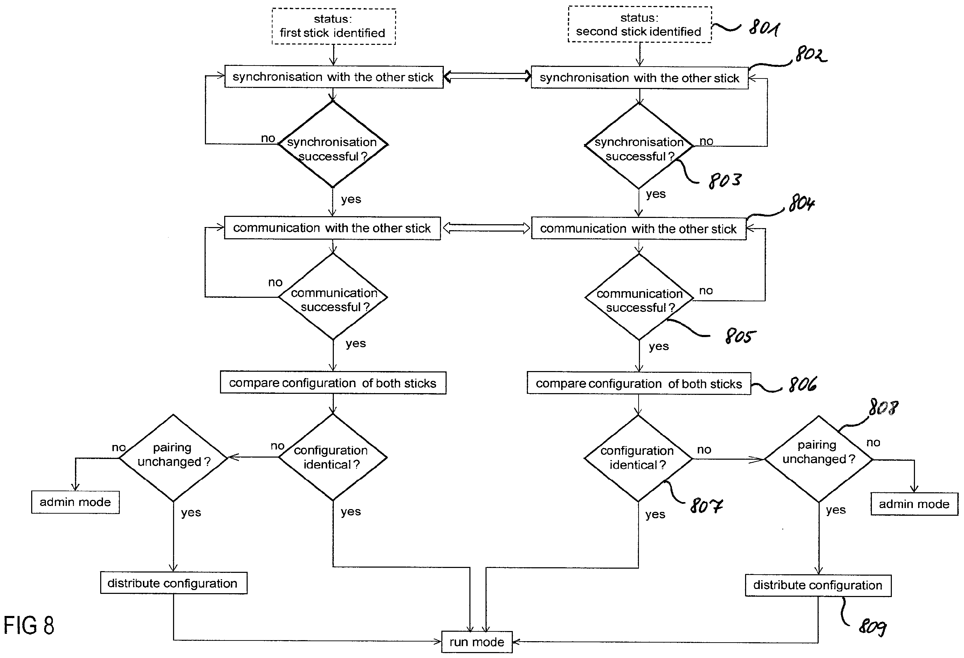

The process as shown in Fig. 7 is performed for the first optical unit 102 and for the second optical unit 104. Thereafter, both sticks have the status that they are identified. With this status, the power-up procedure of the light curtain continues according to the flow chart depicted in Fig. 8.

As shown in Fig. 8, the first and second optical units after having preformed their respective own identification start synchronizing with each other (step 802). When using the exemplary embodiment shown in Fig. 6, the synchronization step is performed via the bidirectional optical communication 134 using the same beams that are also used for monitoring the protected area. In step 803, it is decided for each of the two optical units whether the synchronization was successful or step 802 is repeated, if this is not the case. If the synchronization has been successful, the communication with the respective other stick is established in step 804. In step 805, it is determined whether the communication has been established successfully, and step 804 is repeated if this is not the case.

Next, the configurations of both sticks are compared to each other (step 806), and it is decided whether the configurations of the two sticks are identical (step 807). If this is the case, the process enters the run mode, which is the usual operation mode where the light curtain monitors a protected area.

If the configuration is not identical, however, it is checked in step 808 whether the pairing between the two sticks has changed (step 808). If the pairing has changed, the process exits towards the administration mode (explained below with reference to Fig. 9). If the pairing has remained unchanged, however, the new configuration is distributed to all optoelectronic components in the optical unit (step 809). According to the present invention, step 808 is a safeguard against situations where a neighboring third stick erroneously succeeds to synchronize with one of the first and second sticks.

Fig. 9 schematically illustrates the administration mode ("admin mode") that is entered when a user input is needed. In any case, entering the administration mode causes the OSSDs to be switched OFF.

This mode may comprise different activities. Firstly, the administration mode allows for diagnosis. Data are sent from the optical unit for instance to a computer when requested or permanently (steps 910 to 919). These data comprise for example operating data, configuration data or error data, e. g. length, resolution, product-ID number, production date, serial number, firmware, software, etc. Furthermore, the administration mode may comprise a configuration procedure and a firmware download mode. For these activities, data are sent for instance from a computer to the optical unit on request and new configuration sets or firmware are downloaded.

In the administration mode, firstly a checking and possible teach-in procedure regarding the type of plug-in module can be performed (steps 901 to 903). Next, also a DIP switch confirmation can be performed (steps 904 to 906). In particular, changes in the position of the DIP switches are confirmed by a user. Furthermore, also the pairing of the two optical units forming a light curtain is checked and confirmed in the administration mode (steps 907 to 909). As mentioned above, if the light curtain recognizes a new situation of the plug-in module (for example a new DIP switch setting), then this new configuration must be confirmed by a user. This process can also be described as a teach-in of a new configuration.

Together with the present invention, also a beam coding may be used. Exemplarily, the principal stick, which is configured as a receiver ("Rx stick"), has a DIP switch to set the beam coding. Therefore, the user must validate the correct pairing of each system when beam coding is used, i.e. when the DIP switch for beam coding does not have the default position. The confirmation procedure may be used in both sticks, principal and companion, and may advantageously be performed as follows.

Firstly, the beam coding is changed using the appropriate DIP switch. Then, the system is installed and powered up; all other systems which could influence the confirmation process must be unpowered; at least some beams must be uninterrupted.

Now, it has to be waited until the system has started up and synchronized. The OSSD remain OFF in any case, i. e. whether the protective field is interrupted or not. According to the present invention, the device IDs of the sticks are exchanged and paired automatically. A DIP switch confirmation procedure is required at the principal and the same confirmation procedure is required at the companion (if several systems are in the area, only one single companion, i.e. the associated and corresponding one, is allowed to confirm). After completion of these steps, if the beams are free, the OSSD are switched ON.

According to an advantageous embodiment, the procedure is performed via optical communication. In particular, the user may set the principal to beam coding (with confirming) and the principal stick sends the information about this setting via optical communication to the companion. The companion now may wait for a confirmation and the user confirms the setting at the companion. The companion sends the confirmation optically to the principal, which sends an acknowledge message to the companion. Only then the companion changes the beam coding and acknowledges it to principal. Both sticks are then ready for normal operation.

Of course, this confirmation procedure may only be selected (performed) at the considered system - if other systems are installed nearby, such a confirmation must not be done.

According to the present invention, the correct pairing must be checked by the system (not by the user, but automatically) minimally at each power-up (i.e. the stick ID or cascaded unit ID are exchanged). A higher safety level can be achieved when doing it more often, for instance before activating the OSSD, when synchronizing the two sticks, and/or periodically during operation.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising", "having", "including", and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Exemplary embodiments are described herein. Variations of those embodiments may become apparent to those of ordinary skill in the art upon reading the foregoing description. The inventor(s) expect skilled artisans to employ such variations as appropriate, and the inventor(s) intend for the invention to be practiced otherwise than as specifically described herein. It should be noted and understood that there can be improvements and modifications made of the present invention described in detail above without departing from the scope of the invention as set forth in the accompanying claims.

**Reference Numerals:**

| **Reference Numeral** | **Description** |
|---|---|
| 100 | light curtain |
| 102 | first optical unit |
| 104 | second optical unit |
| 106 | first plug-in module |
| 108 | second plug-in module |
| 110, 310 | first optical module (without controller) |
| 210, 410 | optical module with only receivers |
| 210', 410' | optical module with only emitters |
| 112 | second optical module (with controller) |
| 114 | radiation beam |
| 116 | optoelectronic component |
| 118 | light emitting element |
| 120 | light receiving element |
| 122 | control element |
| 124 | communication bus |
| 126 | optical block |
| 128 | supply block |
| 130 | CPU block |
| 132 | DIP switches |
| 134 | bidirectional optical communication |
| 701-709, 801-809, 901- | process steps |

## Claims

1. Light curtain for monitoring a protective field, said light curtain comprising:
at least one first optical unit (102) comprising at least one first radiation emitter and at least one first radiation receiver, and at least one second optical unit (104) being opposed to said first optical unit (102) comprising
at least one second radiation receiver and at least one second radiation emitter for forming a linear array of radiation beams between the first and second optical unit (102, 104),
said first optical unit (102) comprising a first controller unit and a first communication interface, said second optical unit (104) comprising a second controller and a second communication interface,
wherein a first unique identifier is allocated to the first optical unit (104) and second unique identifier is allocated to the second optical unit (102), and
wherein the first and second communication interfaces are operable to exchange communication signals between the first and second optical units (102, 104),
**characterized in that**
each one of the first and second controllers is operable to verify the identifier of the opposing optical unit based on the transmitted communication signals, wherein the first and second controllers are further operable, during a power-up procedure, to determine whether the power-up procedure is a first power-up procedure after installation,
if the power-up procedure is a first power-up procedure after installation, to store the first unique identifier in the second optical unit and/or to store the second unique identifier in the first optical unit,
if the power-up procedure is not the first power-up procedure after installation, to verify whether the unique identifiers of the first and/or second optical units match with the stored identifiers.

2. Light curtain according to claim 1, wherein said first and second communication interfaces are formed by said first and second radiation emitters and radiation receivers.

3. Light curtain according to one of the preceding claims, wherein said first and second optical units (102, 104) each comprise a transceiver unit carrying a plurality of light emitting elements and light receiving elements, said first and second transceiver units having an identical structure.

4. Light curtain according to one of the preceding claims, wherein each optical unit (102, 104) comprises storing means for storing its own unique identifier and for storing the opposing optical unit's unique identifier.

5. Method of operating a light curtain having at least one first optical unit (102) comprising at least one first radiation emitter and at least first radiation receiver, and at least one second optical unit (104) being opposed to said first optical unit comprising at least one second radiation receiver and at least one second radiation emitter for forming a linear array of radiation beams between the first and second optical unit (102, 104), said first optical unit (102) comprising a first controller unit and a first communication interface, said second optical unit (104) comprising a second controller and a second communication interface, said method being **characterized in** the following steps:
transmitting a first unique identifier assigned to the first optical unit towards the second optical unit, and transmitting a second unique identifier assigned to the second optical unit towards the first optical unit,
verifying whether the received unique identifiers of the first and second optical units match with identifiers that are stored in the receiving optical unit,
during a power-up procedure, determining whether the power-up procedure is a first power-up procedure after installation,
if the power-up procedure is a first power-up procedure after installation, storing the first unique identifier in the second optical unit and/or storing the second unique identifier in the first optical unit,
if the power-up procedure is not the first power-up procedure after installation, verifying whether the unique identifiers of the first and/or second optical units match with the stored identifiers.

6. Method according to claim 5, wherein the power-up procedure is stopped, if the unique identifiers of the first and second optical units do not match with the stored identifiers.

7. Method according to claim 5 or 6, wherein a flag is provided which indicates a state where the light curtain is fresh from the factory.

8. Method according to claim 7, wherein after a maintenance operation said flag can be reset into indicating the state where the light curtain is fresh from the factory.

9. Method according to one of the claims 5 to 8, wherein the unique identifier is additionally verified during continuous operation of the light curtain.

10. Method according to one of the claims 5 to 9, wherein said first and second optical units (102, 104) perform a bidirectional optical communication between each other.

11. Method according to one of the claims 5 to 10, wherein said first and second unique identifiers comprise a binary word.

12. Method according to one of the claims 5 to 11, wherein said at least one radiation beam is formed by a pulsed radiation, and wherein a pulse pattern of said radiation beam may be chosen as a beam coding that is specific for the light curtain.

13. Method according to claim 12, wherein, if the light curtain is operated using said beam coding, a user must validate a correct paring of the optical units of the light curtain.

## Patentansprüche

1. Lichtvorhang zum Überwachen eines Schutzfeldes, wobei der Lichtvorhang umfasst:
wenigstens eine erste optische Einheit (102), die wenigstens eine erste Strahlungs-Emissionseinrichtung und wenigstens eine erste Strahlungs-Empfangseinrichtung umfasst, sowie wenigstens eine zweite optische Einheit (104), die der ersten optischen Einheit (102) gegenüberliegt, umfassend
wenigstens eine zweite Strahlungs-Empfangseinrichtung sowie wenigstens eine zweite Strahlungs-Emissionseinrichtung zum Ausbilden einer linearen Anordnung von Strahlen zwischen der ersten und der zweiten optischen Einheit (102, 104),
wobei die erste optische Einheit (102) eine erste Steuerungs-Einheit sowie eine erste Kommunikations-Schnittstelle umfasst und die zweite optische Einheit (104) eine zweite Steuerungs-Einheit sowie eine zweite Kommunikations-Schnittstelle umfasst,
wobei eine erste eindeutige Kennung der ersten optischen Einheit (104) zugeordnet ist und eine zweite eindeutige Kennung der zweiten optischen Einheit (102) zugeordnet ist, und
die erste und die zweite Kommunikations-Schnittstelle so betrieben werden können, dass sie Kommunikations-Signale zwischen der ersten und der zweiten optischen Einheit (102, 104) austauschen,
**dadurch gekennzeichnet, dass**
die erste und die zweite Steuerungs-Einheit jeweils so betrieben werden können, dass sie die Kennung der gegenüberliegenden optischen Einheit auf Basis der gesendeten Kommunikations-Signale überprüfen, wobei die erste und die zweite Steuerungs-Einheit des Weiteren so betrieben werden können, dass sie während eines Einschaltvorgangs feststellen, ob der Einschaltvorgang ein erster Einschaltvorgang nach Installation ist,
die erste eindeutige Kennung in der zweiten optischen Einheit speichern und/oder die zweite eindeutige Kennung in der ersten optischen Einheit speichern, wenn der Einschaltvorgang ein erster Einschaltvorgang nach Installation ist,
überprüfen ob die eindeutigen Kennungen der ersten und/oder der zweiten optischen Einheit mit den gespeicherten Kennungen übereinstimmen, wenn der Einschaltvorgang nicht der erste Einschaltvorgang nach Installation ist.

2. Lichtvorhang nach Anspruch 1, wobei die erste und die zweite Kommunikations-Schnittstelle durch die erste und die zweite Strahlungs-Emissionseinrichtung sowie die erste und die zweite Strahlungs-Empfangseinrichtung gebildet werden.

3. Lichtvorhang nach einem der vorangehenden Ansprüche, wobei die erste und die zweite optische Einheit (102, 104) jeweils eine Sendeempfänger-Einheit umfassen, die eine Vielzahl Licht emittierender Elemente und Licht empfangender Elemente trägt, wobei die erste und die zweite Sendeempfänger-Einheit eine identische Struktur haben.

4. Lichtvorhang nach einem der vorangehenden Ansprüche, wobei jede optische Einheit (102, 104) Speichereinrichtungen zum Speichern ihrer eigenen eindeutigen Kennung sowie zum Speichern der eindeutigen Kennung der gegenüberliegenden optischen Einheit umfasst.

5. Verfahren zum Betreiben eines Lichtvorhangs mit wenigstens einer ersten optischen Einheit (102), umfassend
wenigstens eine erste Strahlungs-Emissionseinrichtung und wenigstens eine erste Strahlungs-Empfangseinrichtung sowie wenigstens eine zweite optische Einheit (104), die der ersten optischen Einheit (102) gegenüberliegt, umfassend
wenigstens eine zweite Strahlungs-Empfangseinrichtung sowie wenigstens eine zweite Strahlungs-Emissionseinrichtung zum Ausbilden einer linearen Anordnung von Strahlen zwischen der ersten und der zweiten optischen Einheit (102, 104), wobei die erste optische Einheit (102) eine erste Steuerungs-Einheit sowie eine erste Kommunikations-Schnittstelle umfasst, und die zweite optische Einheit (104) eine zweite Steuerungseinrichtung sowie eine zweite Kommunikations-Schnittstelle umfasst,
wobei das Verfahren durch die folgenden Schritte gekennzeichnet ist:
Senden einer ersten eindeutigen Kennung, die der ersten optischen Einheit zugewiesen wird, zu der zweiten optischen Einheit und Senden einer zweiten eindeutigen Kennung, die der zweiten optischen Einheit zugewiesen wird, zu der ersten optischen Einheit, Überprüfen, ob die empfangenen eindeutigen Kennungen der ersten und der zweiten optischen Einheit mit den Kennungen übereinstimmen, die in der empfangenden optischen Einheit gespeichert sind,
während eines Einschaltvorgangs Feststellen, ob der Einschaltvorgang ein erster Einschaltvorgang nach Installation ist,
Speichern der ersten eindeutigen Kennung in der zweiten optischen Einheit und/oder Speichern der zweiten eindeutigen Kennung in der ersten optischen Einheit, wenn der Einschaltvorgang ein erster Einschaltvorgang nach Installation ist,
Überprüfen ob die eindeutigen Kennungen der ersten und/oder der zweiten optischen Einheit mit den gespeicherten Kennungen übereinstimmen, wenn der Einschaltvorgang nicht der erste Einschaltvorgang nach Installation ist.

6. Verfahren nach Anspruch 5, wobei der Einschaltvorgang abgebrochen wird, wenn die eindeutigen Kennungen der ersten und der zweiten optischen Einheit nicht mit den gespeicherten Kennungen übereinstimmen.

7. Verfahren nach Anspruch 5 oder 6, wobei ein Flag vorhanden ist, das einen Zustand anzeigt, in dem der Lichtvorhang fabrikneu ist.

8. Verfahren nach Anspruch 7, wobei nach einem Wartungsvorgang das Flag zurückgesetzt werden kann, um den Zustand anzuzeigen, in dem der Lichtvorhang fabrikneu ist.

9. Verfahren nach einem der Ansprüche 5 bis 8, wobei die eindeutige Kennung zusätzlich im laufenden Betrieb des Lichtvorhangs überprüft wird.

10. Verfahren nach einem der Ansprüche 5 bis 9, wobei die erste und die zweite optische Einheit (102, 104) eine bidirektionale optische Kommunikation untereinander durchführen.

11. Verfahren nach einem der Ansprüche 5 bis 10, wobei die erste und die zweite eindeutige Kennung ein Binärwort umfassen.

12. Verfahren nach einem der Ansprüche 5 bis 11, wobei der wenigstens eine Strahl durch eine gepulste Strahlung gebildet wird und ein Impulsmuster des Strahls als eine Strahlcodierung gewählt werden kann, die für den Lichtvorhang spezifisch ist.

13. Verfahren nach Anspruch 12, wobei, wenn der Lichtvorhang unter Verwendung der Strahlcodierung betrieben wird, ein Benutzer eine korrekte Paarung der optischen Einheiten des Lichtvorhangs verifizieren muss.

## Revendications

1. Rideau de lumière pour surveiller un champ de protection, ledit rideau de lumière comprenant :
au moins une première unité optique (102) comprenant au moins un premier émetteur de rayonnement et au moins un premier récepteur de rayonnement, et au moins une deuxième unité optique (104) qui est opposée à ladite première unité optique (102) comprenant au moins un deuxième récepteur de rayonnement et au moins un deuxième émetteur de rayonnement pour former un réseau linéaire de faisceaux de rayonnement entre les première et deuxième unités optiques (102, 104),
ladite première unité optique (102) comprenant une première unité de commande et une première interface de communication, ladite deuxième unité optique (104) comprenant une deuxième unité de commande et une deuxième interface de communication,
dans lequel un premier identifiant unique est attribué à la première unité optique (104) et un deuxième identifiant unique est attribué à la deuxième unité optique (102), et
dans lequel les première et deuxième interfaces de communication peuvent fonctionner pour échanger des signaux de communication entre les première et deuxième unités optiques (102, 104),
**caractérisé en ce que**
chacune des première et deuxième unités de commande peut fonctionner pour vérifier l'identifiant de l'unité optique opposée sur la base des signaux de communication transmis, dans lequel les première et deuxième unités de commande peuvent en outre fonctionner, pendant une procédure de mise sous tension, pour déterminer si la procédure de mise sous tension est une première procédure de mise sous tension après l'installation,
si la procédure de mise sous tension est une première procédure de mise sous tension après l'installation, pour stocker le premier identifiant unique dans la deuxième unité optique et/ou pour stocker le deuxième identifiant unique dans la première unité optique,
si la procédure de mise sous tension n'est pas la première procédure de mise sous tension après l'installation, pour vérifier si les identifiants uniques de la/des première et/ou deuxième unité(s) optique(s) correspondent aux identifiants stockés.

2. Rideau de lumière selon la revendication 1, dans lequel lesdites première et deuxième interfaces de communication sont formées par lesdits premiers et deuxièmes émetteurs de rayonnement et récepteurs de rayonnement.

3. Rideau de lumière selon l'une des revendications précédentes, dans lequel lesdites première et deuxième unités optiques (102, 104) comprennent chacune une unité émettrice-réceptrice portant une pluralité d'éléments émetteurs de lumière et d'éléments récepteurs de lumière, lesdites première et deuxième unités émettrices-réceptrices ayant une structure identique.

4. Rideau de lumière selon l'une des revendications précédentes, dans lequel chaque unité optique (102, 104) comprend un moyen de stockage pour stocker son propre identifiant unique et pour stocker l'identifiant unique de l'unité optique opposée.

5. Procédé de fonctionnement d'un rideau de lumière ayant au moins une première unité optique (102) comprenant au moins un premier émetteur de rayonnement et au moins un premier récepteur de rayonnement, et au moins une deuxième unité optique (104) qui est opposée à ladite première unité optique comprenant au moins un deuxième récepteur de rayonnement et au moins un deuxième émetteur de rayonnement pour former un réseau linéaire de faisceaux de rayonnement entre les première et deuxième unités optique (102, 104), ladite première unité optique (102) comprenant une première unité de commande et une première interface de communication, ladite deuxième unité optique (104) comprenant une deuxième unité de commande et une deuxième interface de communication, ledit procédé étant **caractérisé par** les étapes suivantes :
la transmission d'un premier identifiant unique attribué à la première unité optique vers la deuxième unité optique, et la transmission d'un deuxième identifiant unique attribué à la deuxième unité optique vers la première unité optique,
la vérification que les identifiants uniques reçus des première et deuxième unités optiques correspondent à des identifiants qui sont stockés dans l'unité optique réceptrice,
pendant une procédure de mise sous tension, la détermination que la procédure de mise sous tension est une première procédure de mise sous tension après l'installation,
si la procédure de mise sous tension est une première procédure de mise sous tension après l'installation, le stockage du premier identifiant unique dans la deuxième unité optique et/ou le stockage du deuxième identifiant unique dans la première unité optique,
si la procédure de mise sous tension n'est pas la première procédure de mise sous tension après l'installation, la vérification que les identifiants uniques de la/des première et/ou deuxième unité(s) optique(s) correspondent aux identifiants stockés.

6. Procédé selon la revendication 5, dans lequel la procédure de mise sous tension est arrêtée, si les identifiants uniques des première et deuxième unités optiques ne correspondent pas aux identifiants stockés.

7. Procédé selon la revendication 5 ou 6, dans lequel un drapeau est fourni qui indique un état dans lequel le rideau de lumière est fraîchement sorti de l'usine.

8. Procédé selon la revendication 7, dans lequel, après une opération de maintenance, ledit drapeau peut être réinitialisé pour indiquer l'état dans lequel le rideau de lumière est fraîchement sorti de l'usine.

9. Procédé selon l'une des revendications 5 à 8, dans lequel l'identifiant unique est en outre vérifié lors du fonctionnement continu du rideau de lumière.

10. Procédé selon l'une des revendications 5 à 9, dans lequel lesdites première et deuxième unités optiques (102, 104) effectuent une communication optique bidirectionnelle entre elles.

11. Procédé selon l'une des revendications 5 à 10, dans lequel lesdits premier et deuxième identifiants uniques comprennent un mot binaire.

12. Procédé selon l'une des revendications 5 à 11, dans lequel ledit au moins un faisceau de rayonnement est formé par un rayonnement pulsé, et dans lequel un motif d'impulsion dudit faisceau de rayonnement peut être choisi comme un codage de faisceau qui est spécifique au rideau de lumière.

13. Procédé selon la revendication 12, dans lequel, si le rideau de lumière fonctionne en utilisant ledit codage de faisceau, un utilisateur doit valider un appairage correct des unités optiques du rideau de lumière.
